# EUROPÄISCHE PATENTSCHRIFT

(11) **EP 3 592 447 B1**
(45) Veröffentlichungstag und Bekanntmachung des Hinweises auf die Patenterteilung: **31.03.2021**
(21) Anmeldenummer: 18714703.8
(22) Anmeldetag: 28.02.2018
(51) Int. Cl.: B01D 35/16, B01D 29/23

(54) **FILTERELEMENT FÜR EINE WERKZEUGMASCHINE, WERKZEUGMASCHINE, VERWENDUNG UND AUSTAUSCHVERFAHREN**
FILTER ELEMENT FOR A MACHINE TOOL, MACHINE TOOL, USE, AND EXCHANGE METHOD
ÉLÉMENT FILTRANT POUR UNE MACHINE-OUTIL, MACHINE-OUTIL, UTILISATION ET PROCÉDÉ DE REMPLACEMENT

(30) Priorität: 10.03.2017 DE 102017002283
(43) Veröffentlichungstag der Anmeldung: 15.01.2020
(73) Patentinhaber: Mann + Hummel GmbH, 71636 Ludwigsburg (DE)
(72) Erfinder: MEIER, Alexander, Speyer (DE); MAURER, Norbert, 67346 Speyer (DE); PANNI, Andreas, 76684 Östringen-Odenheim (DE); STARK, Dennis, 69256 Mauer (DE); SCHULZE, Michael, 67346 Speyer (DE)
(74) Vertreter: Nickolaus, Mathias
(86) Internationale Anmeldenummer: PCT/EP2018/054935
(87) Internationale Veröffentlichungsnummer: WO 2018/162300

(56) Entgegenhaltungen:
- WO-A1-01/58566
- CN-U- 202 061 440
- FR-A1- 2 948 293

## Beschreibung

### Technisches Gebiet

Die Erfindung betrifft ein Filterelement für Betriebsflüssigkeiten einer Werkzeugmaschine, insbesondere für eine Funkenerodiermaschine. Die Erfindung betrifft ferner eine Werkzeugmaschine umfassend ein solches Filterelement, die Verwendung eines solchen Filterelementes in einer Werkzeugmaschine und ein Austauschverfahren.

### Stand der Technik

Als Filterelemente werden dem Fachmann seit langem bekannt austauschbare Verschleißteile bezeichnet, die in der Regel einen porösen Filtermedienkörper und mit diesem verbundene Dicht- und/oder Stabilisierungsmittel wie Endscheiben, Dichtungen usw. aufweisen. Filterelemente werden aufgrund der Austauschbarkeit innerhalb von Gehäusen auch oft als Filtereinsätze bezeichnet.

Filterelemente zum Reinigen von Betriebsflüssigkeiten von Werkzeugmaschinen wie Erodiermaschinen sind üblicherweise voluminös und weisen im beladenen Zustand ein hohes Gewicht auf. In beladenem Zustand werden diese aus der Werkzeugmaschine ausgebaut und entsorgt. Ein Filterelement für Funkenerodiermaschinen ist beispielsweise in der DE 10 2009 057 438 B3 gezeigt.

Aus der FR 2 948 293 A1 ist ein Hohlfilter mit Endscheiben bekannt, wobei ein Filtermedium außen von einem druckfesten, durchlässigen Mantel umgeben ist, welcher mit den Endscheiben gekoppelt ist. Eine Endscheibe ist offen ausgeführt und dient als Flüssigkeitszulauf zur innerhalb des Filtermediums befindlichen Rohseite. Die gegenüberliegende Endscheibe weist eine zentrale Auslassöffnung auf, die mit der Einlassöffnung auf einer gemeinsamen Achse liegt, und die im Betrieb von einem Schließelement verschlossen ist.

Die Auslassöffnung ist in einem zentralen, mit Innengewinde versehenen Stutzen angeordnet, welcher sich in das Innere des Filterelements erstreckt.

Das Schließelement wird vollständig in diesen Stutzen eingeschraubt, so dass es innerhalb der Endscheibe angeordnet ist und in den Innenraum des Filterelements hineinragt.

Funkenerodiermaschinen dienen der Bearbeitung von metallischen Materialien. Dabei werden abgetragene Partikel mit einem flüssigen Dielektrikum wie Erodieröl weggespült und im Filterelement aufgefangen. In beladenem Zustand sind diese durch ihr zwangsläufig hohes Gewicht schwer und unhandlich. Häufig wird das Betriebsmittel aus dem verbrauchten Filterelement mit Druckluft ausgeblasen, was jedoch das Filtermedium beschädigen und zum Eintrag von verunreinigtem Betriebsmittel auf die Reinseite des Filterelements führen kann. Die Filterelemente werden in der Maschine in der Regel aufgrund ihrer Größe von ca. 30 cm bis 80 cm im Durchmesser freistehend betrieben. Dabei werden sie üblicherweise wie auch in der vorliegenden Erfindung von innen nach außen durchströmt, die zu filternde Flüssigkeit wird üblicherweise wie auch in der vorliegenden Erfindung über einen Schlauchanschluss dem Innenraum zugeführt. Wenn das Filterelement mit abgeschiedenem Material voll beladen ist, dauert es in drucklosem Zustand oft vergleichsweise lange, bis die noch im Filterelement verbliebene Flüssigkeit abgelaufen ist, wodurch das Filterelement für eine lange Zeit zu schwer für einen Wechsel ohne Hebehilfsmittel ist.

### Offenbarung der Erfindung

Eine Aufgabe der Erfindung ist es, ein Filterelement zu schaffen, das eine einfachere Handhabung, insbesondere einen schnelleren Austausch, erlaubt.

Die vorgenannte Aufgabe wird von einem Filterelement gelöst mit zwei Endscheiben, wobei in einer der Endscheiben eine Einlassöffnung für die Betriebsflüssigkeit in einen inneren Hohlraum angeordnet ist und an der gegenüberliegenden Endscheibe eine mit dem Hohlraum korrespondierende, durch ein Schließelement verschließbare Drainageöffnung vorgesehen ist, wobei das Schließelement zumindest im geschlossenen Zustand der Drainageöffnung in einem von der drainageseitigen Endscheibe axial nach innen weisenden Dichtstutzen angeordnet ist. Der Dichtstutzen weist an einer Innenseite ein Gewinde auf, in welches ein Lösewerkzeug einschraubar ist, wobei das Lösewerkzeug direkt oder indirekt auf das Schließelement wirkt. Die Aufgabe wird ferner gelöst durch die Verwendung eines solchen Filterelements in einer Funkenerodiermaschine, mit einer Funkenerodier-maschine umfassend ein solches Filterelement sowie mit einem Austauschverfahren für ein solches Filterelement.

Günstige Ausgestaltungen und Vorteile der Erfindung ergeben sich aus den weiteren Ansprüchen, der Beschreibung und der Zeichnung.

Bevorzugt dient das Filterelement zum Reinigen einer Betriebsflüssigkeit einer Werkzeugmaschine, insbesondere einer Funkenerodiermaschine. Es umfasst weiter bevorzugt einen durchströmbaren, druckstabilen Mantel, der beispielsweise aus Kunststoff oder Metall gebildet und gitterartig oder lochblechartig perforiert sein kann, ein in diesem

Mantel angeordnetes, bevorzugt zickzackförmig gefaltetes und ringförmig zu einem ringförmigen Filterkörper geschlossenes Filtermedium mit einer bevorzugt außen angeordneten Reinseite und einer bevorzugt innen angeordneten Rohseite, wobei sich das Filtermedium entlang einer Längsachse zwischen zwei dichtend mit dem Filtermedium verbundenen Endscheiben erstreckt und einen inneren, bevorzugt rohseitigen Hohlraum umgibt, wobei der Mantel das Filtermedium umgibt und weiter bevorzugt fest mit den Endscheiben verbunden ist, wobei in einer der Endscheiben eine Einlassöffnung für die Betriebsflüssigkeit in den inneren Hohlraum angeordnet ist, und wobei an der gegenüberliegenden Endscheibe eine mit dem Hohlraum korrespondierende Drainageöffnung vorgesehen ist, wobei diese gegenüberliegende, drainageseitige Endscheibe ein lösbares Schließelement umfasst, welches die Drainageöffnung für den Betrieb des Filterelements verschließt und bevorzugt zur Vorbereitung des Austauschs des Filterelements geöffnet werden kann, wobei das Schließelement axial beweglich ist, insbesondere zur Öffnung der Drainageöffnung vor dem Austausch des Filterelementes, wobei das Schließelement zumindest im geschlossenen Zustand der Drainageöffnung in einem von der drainageseitigen Endscheibe axial nach innen weisenden Dichtstutzen angeordnet ist, wobei der Dichtstutzen an einer Innenseite ein Gewinde aufweist, in welches ein Lösewerkzeug einschraubar ist, wobei das Lösewerkzeug direkt oder indirekt auf das Schließelement wirkt.

Es wird mithin erfindungsgemäß ein Filterelement zum Reinigen einer Betriebsflüssigkeit von Werkzeugmaschinen vorgeschlagen, umfassend ein in einem insbesondere durch den Mantel und die Endscheiben gebildeten Filtertopf angeordnetes Filtermedium zwischen einer Reinseite und einer Rohseite, das sich zwischen zwei Endscheiben erstreckt und einen inneren Hohlraum umgibt. In einer der Endscheiben ist eine Einlassöffnung für die Betriebsflüssigkeit in den inneren Hohlraum angeordnet. An der gegenüberliegenden Endscheibe ist eine mit dem Hohlraum korrespondierende, durch ein Schließelement verschließbare Drainageöffnung vorgesehen.

Vorteilhaft kann das Filterelement nach Erreichen der maximalen Betriebsdauer einfacher entsorgt werden, indem im Filterelement enthaltene Betriebsflüssigkeit abgelassen werden kann. Üblicherweise ist das Endgewicht solcher Filterelemente aufgrund ihrer notwendigen Größe zum Reinigen einer Betriebsflüssigkeit erheblich und kann im Bereich von deutlich über 30 kg liegen. Durch die Möglichkeit, wenigstens einen Teil des Inhalts durch die Drainageöffnung abzulassen, wird das Gewicht reduziert, und das Bedienpersonal kann das Filterelement leichter handhaben. Zudem kann im Filterelement vorhandene Betriebsflüssigkeit aufgefangen und wiederverwendet werden. So ist ein Dielektrikum wie beispielsweise Erodieröl, das bei Erodiermaschinen zum Einsatz kommt, kostspielig und kann auf diese Weise zu einem großen Teil zurückgewonnen werden. Der Eintrag von Verunreinigungen auf die Reinseite des Filterelements kann vermieden werden. Auch ist durch die Rückgewinnung des Erodieröls eine umweltschonende Entsorgung des Filterelements möglich.

Gemäß einer günstigen Ausgestaltung ist das Schließelement axial beweglich. Hierdurch kann das Schließelement mit einfachen Mitteln zwischen einer dichtenden Stellung und einer geöffneten Stellung bewegt werden.

Vorteilhaft wird ein Lösewerkzeug zum Betätigen des Schließelements und somit zum Entleeren des Filterelements angesetzt und wieder entfernt. Das Lösewerkzeug kann direkt oder indirekt auf das Schließelement wirken. Dabei kann, je nach Befestigungsart des Schließelements im Dichtstutzen, dieses gedreht und dabei axial nach innen in den Filtertopf bewegt werden oder das Schließelement kann nach innen gedrückt werden. Das Lösewerkzeug kann eine Kontur aufweisen, mit dem es in eine Gegenkontur des Schließelements eingreifen kann, um dieses beispielsweise durch eine Drehbewegung zu lösen. Das Lösewerkzeug kann dabei ein Gewinde aufweisen, das in das Gewinde des Dichtstutzens einschraubbar ist. Das Lösewerkzeug kann ferner mit einer Dichtung versehen sein, die beim Ansetzen des Lösewerkzeugs an das Schließelement dafür sorgt, dass das Betriebsmittel beim Öffnen der Drainageöffnung nicht unkontrolliert aus dem Filterelement ausläuft. Das Lösewerkzeug kann vorteilhaft so ausgebildet sein, dass eine Drainageleitung angeschlossen werden kann. Damit kann das Betriebsmittel sicher aufgefangen werden und eine Verschmutzung der Umgebung vermieden werden.

Alternativ kann ein Lösewerkzeug vorgesehen sein, mit dem das Schließelement axial zur drainageseitigen Endscheibe bewegbar ist. Vorteilhaft ist jeweils, wenn das Schließelement im geschlossenen und geöffneten Zustand ganz im Filtertopf verschwindet.

Der druckstabile Mantel kann das Filtermedium abstützen. Der Mantel kann peroriert sein, um die Durchströmbarkeit zu gewährleisten. Dabei kann gegebenenfalls ein Spritzschutz am oder im Mantel vorgesehen sein, so dass gereinigte Betriebsflüssigkeit nicht unkontrolliert aus dem Filterelement herausspritzen kann.

Die Endscheiben können spritzgegossen oder aus einer Vergussmasse gefertigt sein, gegebenenfalls mit Einlegeteilen aus Kunststoff oder Metall in der Einlassöffnung und/oder Drainageöffnung. Die Endscheiben können auch als umgeformte Blechscheiben gebildet sein.

Gemäß einer günstigen Ausgestaltung kann der Dichtstutzen ein Gewinde aufweisen, womit das Schließelement zum Öffnen axial nach innen bewegbar sein kann.

Gemäß einer günstigen Ausgestaltung können zwei verschiedene Gewinde für Schließelement und Lösewerkzeug vorgesehen sein.

Gemäß einer günstigen alternativen Ausgestaltung kann das Gewinde für das Schließelement und ein Lösewerkzeug gemeinsam vorgesehen sein. Durch Drehen des Lösewerkzeugs kann das Schließelement in den Gehäusetopf bewegt werden und auf diese Weise die Drainageöffnung freigeben.

Gemäß einer günstigen alternativen Ausgestaltung kann das Schließelement mittels eines Presssitzes in dem Dichtstutzen befestigbar sein. Denkbar ist alternativ auch eine Bajonettverbindung des Schließelements mit dem Dichtstutzen. Es kann die für den jeweiligen Einsatzzweck des Filterelements geeignete Befestigungsart des Schließelements vorgesehen sein.

Gemäß einer günstigen Ausgestaltung können die Einlassöffnung und die Drainageöffnung sich entlang der Längsachse gegenüberliegen. Vorteilhaft können Einlassöffnung und Drainageöffnung bei geöffneter Drainageöffnung in direkter Fluidverbindung stehen. Dies erlaubt eine einfache Konstruktion des Filterelements. Die Betriebsflüssigkeit kann aus dem rohseitigen Hohlraum im Filtermedium einfach ablaufen.

Gemäß einer günstigen Ausgestaltung kann in der Drainageöffnung ein Schließelement angeordnet sein, das axial nach innen in den Filtertopf ragt. Insbesondere taucht das Schließelement vollständig in den Filtertopf ein. Insbesondere kann das Schließelement in einem axial nach innen weisenden, an die Drainageöffnung anschließenden Dichtstutzen angeordnet sein. Vorteilhaft kann dabei der Dichtstutzen ein Gewinde aufweisen, womit das Schließelement in die Drainageöffnung einschraubbar ist. Dadurch, dass das Schließelement in den Hohlraum im Filtertopf ragt, kann der Boden des Filterelements plan ausgebildet sein, so dass das Filterelement problemlos auf einer Fläche abgestellt werden kann. Dies erleichtert die Handhabung und auch die Montage des Filterelements, da das Schließelement nicht übersteht und beschädigt werden oder Beschädigungen verursachen könnte. Der in den Filtertopf ragende Dichtstutzen erlaubt eine sichere Befestigung des Schließelements und eine einfache Abdichtung. Das Gewinde im Dichtstutzen ermöglicht eine einfache Befestigung und ein einfaches Lösen des Schließelements.

Gemäß einer günstigen Ausgestaltung kann das Schließelement an seiner Außenseite ein Dichtelement aufweisen. Dies erlaubt eine einfache und zuverlässige Abdichtung des Hohlraums, wenn das Dichtelement an einer Innenwand eines entsprechenden Dichtstutzens anliegt.

Gemäß einer günstigen alternativen Ausgestaltung kann die Drainageöffnung mit einem Filterelement verschlossen oder verschließbar sein. So kann das Filterelement in der Drainageöffnung angeordnet sein. Dies ist besonders günstig, wenn das Schließelement von der einlassseitigen Endscheibe betätigt werden kann. Die im Filterelement noch befindliche Betriebsflüssigkeit kann direkt an die Reinseite des Filterelements abgeführt. werden, so dass das Filterelement erst im entleerten Zustand bewegt werden muss. Wird das Schließelement von der drainageseitigen Endscheibe her betätigt, kann ein Filterelement auch in einem Ablassstutzen oder Ablassschlauch vorgesehen sein und so der Reinseite zugeführt werden.

Gemäß einer günstigen Ausgestaltung kann das Filterelement einen Durchmesser zwischen 300 mm und 350 mm, vorzugsweise zwischen 310 mm und 340 mm, aufweisen. Eine Drainageöffnung ist bei diesen großen Abmessungen besonders vorteilhaft. Derartige Filterelemente werden häufig in Erodiermaschinen eingesetzt.

Gemäß einer günstigen Ausgestaltung kann das Filterelement eine axiale Höhe zwischen 250 mm und 500 mm, vorzugsweise zwischen 300 mm und 450 mm, aufweisen. Eine Drainageöffnung ist bei diesen großen Abmessungen besonders vorteilhaft. Derartige Filterelemente werden häufig in Erodiermaschinen eingesetzt.

Die Erfindung betrifft ferner eine Werkzeugmaschine, insbesondere eine Funkenerodiermaschine, umfassend ein vorbeschriebenes Filterelement.

Die Erfindung betrifft ferner die Verwendung eines vorbeschriebenen Filterelements in einer Werkzeugmaschine, insbesondere einer Funkenerodiermaschine.

Die Erfindung betrifft ferner Verfahren zum Austausch eines vorbeschriebenen Filterelementes, insbesondere in einer Werkzeugmaschine, insbesondere einer Funkenerodiermaschine, umfassend die Schritte:
- Trennen einer Einlassleitung von einer Einlassöffnung des Filterelementes, wobei die Einlassleitung bevorzugt mittels einer handbedienbaren Schnellkupplung mit der Einlassöffnung verbunden ist,
- vor, nach oder während der Trennung der Einlassleitung Öffnen der Drainageöffnung durch Lösen oder Entfernen des Schließelements, wonach im Filterelement verbliebene Flüssigkeit abläuft,
- Austausch des Filterelements durch ein unverbrauchtes Filterelement, bevorzugt durch ein vorbeschriebenes Filterelement mit geschlossenem Schließelement
- Wiederanschluss der Einlassleitung an die Einlassöffnung, bevorzugt mittels der Schnellkupplung.

Vorteilhaft wird beim Ablaufen der Flüssigkeit diese so geleitet oder abgefangen, dass sie nicht auf die Reinseite, insbesondere nicht in einen reinseitigen Vorratsbehälter gelangt.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine teilweise geschnittene seitliche Ansicht eines Filterelements nach einem ersten Ausführungsbeispiel der Erfindung;
- Fig. 2: Mantel und Endscheiben des Filterelements aus Figur 1 in Explosionsdarstellung;
- Fig. 3: eine Endscheibe eines Filterelements mit Drainageöffnung nach einem Ausführungsbeispiel der Erfindung;
- Fig. 4: ein Detail der Endscheibe aus Figur 3;
- Fig. 5: ein Detail einer Endscheibe eines Filterelements mit Drainageöffnung nach einem weiteren Ausführungsbeispiel der Erfindung;
- Fig. 6: eine teilweise geschnittene seitliche Ansicht einer Funkenerodiermaschine mit einem mit einem Filterelement nach dem weiteren Ausführungsbeispiel der Erfindung aus Figur 1 bis 4;

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

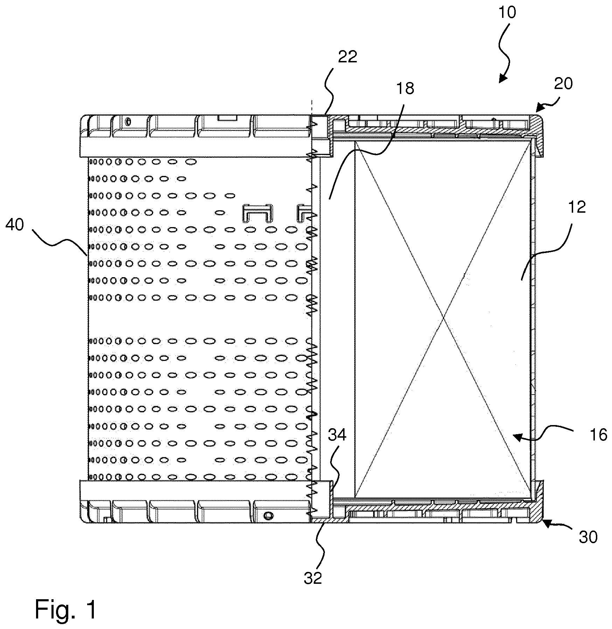

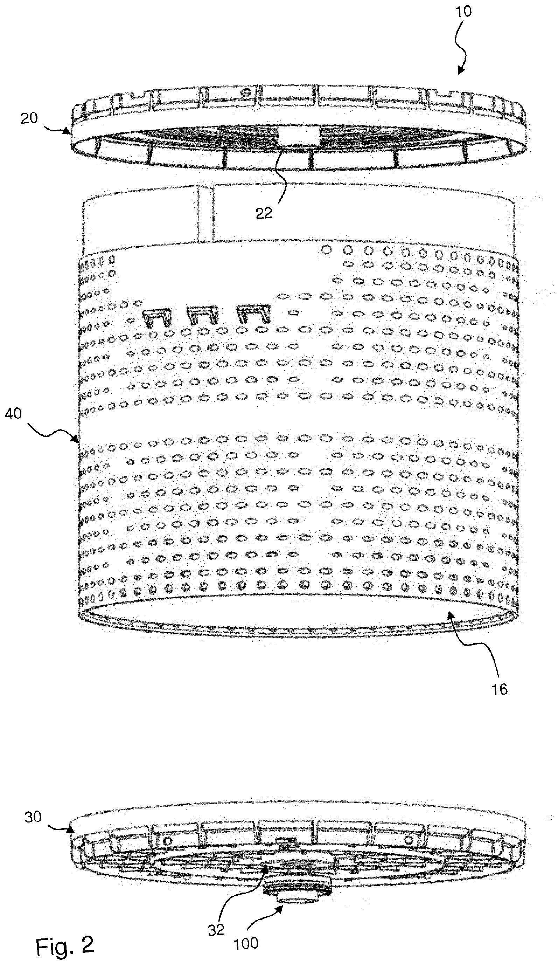

Figur 1 zeigt in einer teilweise geschnittenen seitlichen Ansicht ein Filterelement 10 gemäß einer ersten Ausführungsform der Erfindung. Figur 2 zeigt den Mantel 40 und beide Endscheiben 20, 30 des Filterelements 10 aus Figur 1 in Explosionsdarstellung. Das Filterelement 10 wird nachfolgend zunächst mit Bezug auf die Figuren 1 und 2 näher erläutert.

Das Filterelement 10 ist beispielsweise als ein Einwegfilter ausgebildet, insbesondere als Einwegbetriebsflüssigkeitsfilter einer Erodiermaschine. Das heißt, wenn die Filterkapazität des Filterelements 10 erschöpft ist, wird dieses gänzlich ausgetauscht und entsorgt, wobei jedoch zuvor noch in dem Filterelement 10 enthaltene Betriebsflüssigkeit, beispielsweise Erodieröl, aus dem Filterelement 10 abgelassen wird. Zum einen wird teures Betriebsmittel eingespart, zum anderen wird die Handhabung des Filterelements 10 erleichtert, das üblicherweise noch zu einem beträchtlichen Teil mit Betriebsmittel und Materialabrieb, etwa Metallspäne, gefüllt ist und daher ein hohes Gewicht aufweist.

Ein günstiges Filterelement 10 für eine Erodiermaschine weist vorteilhaft Durchmesser zwischen 300 mm und 350 mm, vorzugsweise zwischen 310 mm und 340 mm, sowie eine axiale Höhe zwischen 250mm und 500 mm, vorzugsweise zwischen 300 mm und 450 mm, auf.

Das Filterelement 10 kann grundsätzlich zum Filtern eines beliebigen Fluides, also einer Flüssigkeit oder eines Gases, ausgebildet sein. Bevorzugt wird das Filterelement 10 gemäß des vorliegenden Ausführungsbeispiels zum Filtern von Betriebsflüssigkeiten von Werkzeugmaschinen eingesetzt.

Das Filterelement 10 umfasst ein Filtermedium 12, das sich entlang einer Längsachse zwischen zwei Endscheiben 20, 30 erstreckt und einen inneren, rohseitigen Hohlraum 18 auf der Rohseite des Filtermediums 12 umgibt, in welchen die zu reinigende Betriebsflüssigkeit strömt. Das Filtermedium 12 ist von dem druckstabilen Mantel 40 umgeben und gestützt. Das Innere zwischen dem Mantel 40 und den beiden Endscheiben 20, 30 bildet den Filtertopf 16.

Die in der Figur obere, einlassseitige Endscheibe 20 weist eine Einlassöffnung 22 für die Betriebsflüssigkeit in den Hohlraum 18 auf. Die Betriebsflüssigkeit strömt radial nach außen und verlässt das Filterelement 10 durch den reinseitig angeordneten Mantel 40 zur Reinseite des Filterelements 10.

An der der oberen Endscheibe 20 gegenüberliegende Endscheibe 30 ist eine mit dem Hohlraum 18 korrespondierende verschließbare Drainageöffnung 32 vorgesehen. Die Einlassöffnung 22 und die Drainageöffnung 32 liegen sich entlang der Längsachse direkt gegenüber und stehen bei geöffneter Drainageöffnung 32 in direkter Fluidverbindung.

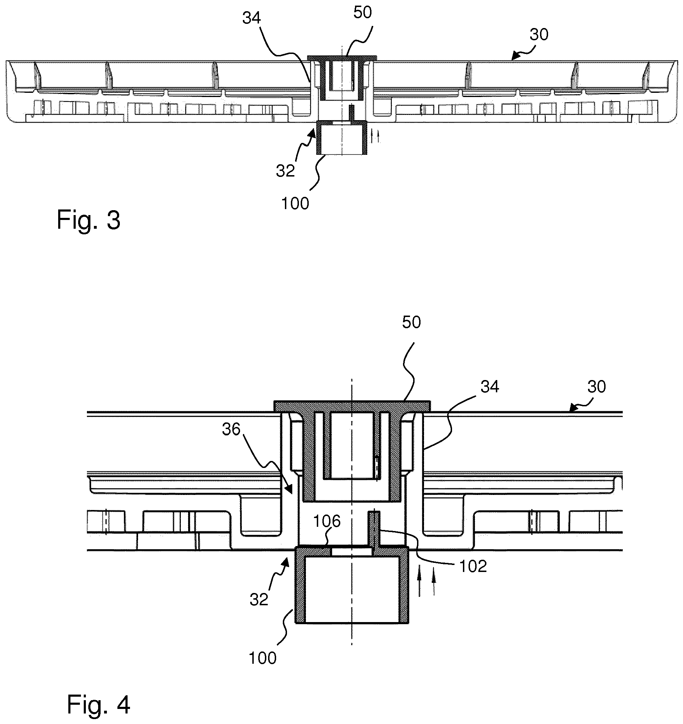

In Figur 2 ist in Explosionsdarstellung das Filterelement aus Figur 1 mit einem Lösewerkzeug 100 dargestellt, mit dem die Drainageöffnung 32 bei Bedarf geöffnet werden kann. Ohne angesetztes Lösewerkzeug 100 ist die untere, drainageseitige Endscheibe 30 mit Drainageöffnung 32 eben ausgebildet, so dass das Filterelement 10 problemlos auf einem flachen Untergrund abgestellt werden kann.
Wie in den folgenden Figuren 3 bis 5 zu sehen ist, ist die Drainageöffnung 32 durch ein Schließelement 50 verschlossen, das axial nach innen in den Hohlraum 18 ragt.

Figur 3 zeigt eine drainageseitige Endscheibe 30 eines Filterelements 10 mit Drainageöffnung 32 nach einem Ausführungsbeispiel der Erfindung mit angesetztem Lösewerkzeug 100. Figur 4 zeigt ein Detail der Endscheibe 30 aus Figur 3. Die Endscheibe 30 mit Drainageöffnung 32 und Schließelement 50 wird nachfolgend zunächst mit Bezug auf die Figuren 3 und 4 näher erläutert.

Das Schließelement 50 ist in einem axial nach innen in den Filtertopf 16 und Hohlraum 18 (Figuren 1 und 2) weisenden, um die Drainageöffnung 32 in der Endscheibe 30 angeordneten Dichtstutzen 34 in einem Presssitz angeordnet und taucht, von der bestimmungsgemäßen Außenseite der Endscheibe 30 her gesehen, vollständig in den Dichtstutzen 34 ein. Das Schließelement 50 kann vor dem Zusammenbau des Filterelements 10 (Figuren 1 und 2) in die Endscheibe 30 eingesetzt werden und beispielsweise in den Dichtstutzen 34 gepresst werden.

Am äußeren Ende des Dichtstutzens 34 ist an dessen Innenseite ein Gewinde 36 vorgesehen, in welches das Lösewerkzeug 100 eingeschraubt werden kann, um das Schließelement 50 aus dem Presssitz herauszubewegen und somit die Drainageöffnung 32 zu öffnen.

Das Lösewerkzeug 100 ist topfförmig ausgebildet und weist einen axial abstehenden Dorn 102 auf, der das Schließelement 50 nach oben drückt, wenn das Lösewerkzeug 100 in das Gewinde 36 eingeschraubt wird. Der Topfboden 106 des Lösewerkzeugs 100 weist eine Öffnung auf, durch welche die Betriebsflüssigkeit ablaufen kann. Gegebenenfalls kann an das Lösewerkzeug 100 ein Schlauch angeschlossen werden, um die ablaufende Betriebsflüssigkeit gezielt abführen zu können. Optional kann am Lösewerkzeug 100 ein Filtermedium vorgesehen sein, oder es kann zwischen Lösewerkzeug 100 und Schließelement ein Filtermedium eingelegt werden. Das beim Öffnen des Schließelements 50 ablaufende Betriebsmittel kann dann der Reinseite des Filterelements 10 (Figur 1 und 2) zugeführt werden.

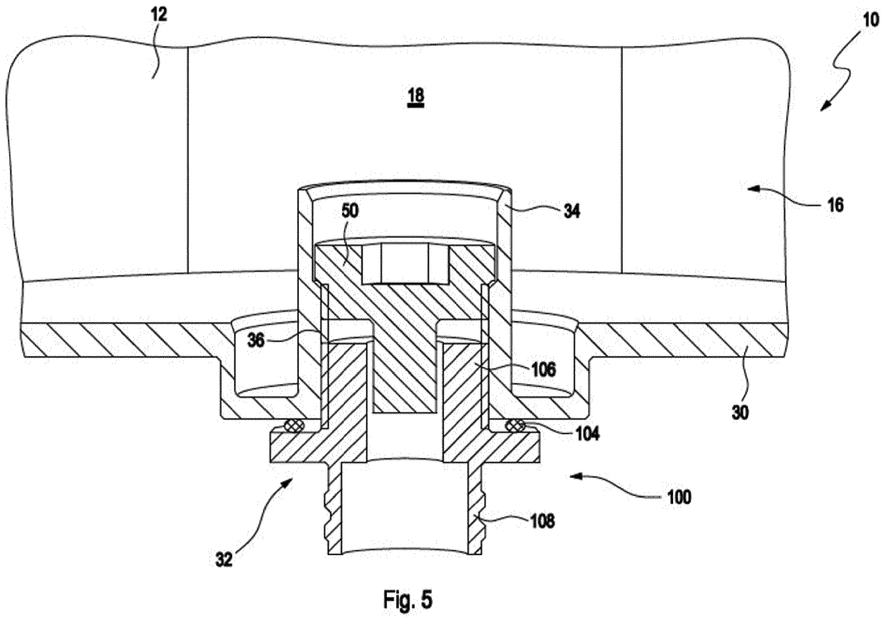

Figur 5 zeigt ein Detail einer drainageseitigen Endscheibe 30 eines Filterelements 10 mit Drainageöffnung 32 nach einem weiteren Ausführungsbeispiel der Erfindung.

Das Schließelement 50 ist anders als im vorstehend beschriebenen Ausführungsbeispiel nicht mit einem Presssitz im Dichtstutzen 34 angeordnet, sondern in das Gewinde 36 auf der Innenseite des Dichtstutzens 34 eingeschraubt. Das Gewinde 36 ist für das Schließelement 50 und das Lösewerkzeug 100 gemeinsam vorgesehen. Optional können auch zwei verschiedene Gewinde für Schließelement 50 und Lösewerkzeug 100 vorgesehen sein.

Das Lösewerkzeug 100 ist als Hohlzylinder ausgebildet und weist etwa mittig einen Bund auf, der zweckmäßigerweise als Mehrkant ausgebildet sein kann. Der in den Dichtstutzen 34 ragende Teil 106 des Lösewerkzeugs 100 weist ein Außengewinde auf. Der über die Endscheibe 30 überstehende Schlauchstutzen 108 dient als Schlauchtülle zur Befestigung eines Schlauchs.

Zum Öffnen der Drainageöffnung 32 wird das Lösewerkzeug 100 in den Dichtstutzen 34 geschraubt und nimmt über eine Schlüssel-Schloss-Kontur das Schließelement 50 in der Drehbewegung mit. Das Schließelement 50 wird somit in den Filtertopf 16 hinein bewegt und gibt so die Drainageöffnung 32 frei. Das Lösewerkzeug 100 kann in vollständig eingeschraubtem Zustand gegen die Endscheibe 30 mittels einer ringförmig umlaufenden Dichtung 104, beispielsweise einer O-Ring-Dichtung, gedichtet sein, so dass das Betriebsmittel durch den Schlauchstutzen 108 fluiddicht abgelassen werden kann.

Optional kann auch hier am Lösewerkzeug 100 ein Filtermedium vorgesehen sein, oder es kann zwischen Lösewerkzeug 100 und Schließelement 50 ein Filtermedium eingelegt werden. Das beim Öffnen des Schließelements 50 ablaufende Betriebsmittel kann dann der Reinseite des Filterelements 10 (Figuren 1 und 2) zugeführt werden.

In einem alternativen nicht dargestellten Ausführungsbeispiel des erfindungsgemäßen Filterelements 10 kann in der drainageseitigen Endscheibe 30 ein Drainagefilterelement eingesetzt werden, beispielsweise ein flaches Element mit einem Rahmen mit einem scheibenförmigen Filtermedium.

In einem weiteren nicht dargestellten Ausführungsbeispiel des erfindungsgemäßen Filterelements 10, kann das Schließelement 50 an seiner Außenseite ein Dichtelement aufweisen.

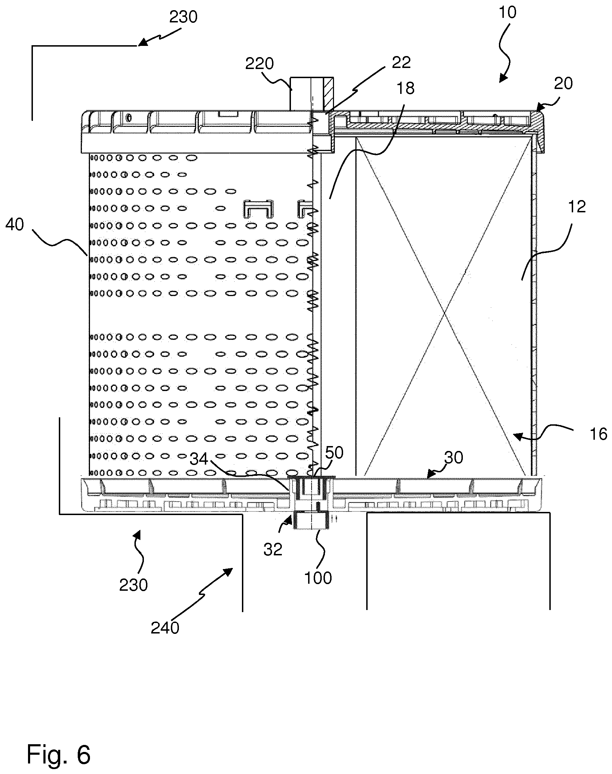

Figur 6 zeigt eine Funkenerodiermaschine 230 umfassend ein vorbeschriebenes Filterelement 10. Eine Einlassleitung 220 ist mit der Einlassöffnung 22 lösbar verbunden. Vor, nach oder während der Trennung der Einlassleitung 220 wird das Schließelement 50 beispielsweise mittels des Lösewerkzeugs 100 gelöst, so dass die Drainageöffnung 32 öffnet und im Filterelement 10 verbliebene Flüssigkeit ablaufen kann, beispielsweise durch den Kanal 240 im oder an einer Filterbasis in oder an der Funkenerodier-maschine 230. Der Kanal 240 kann beispielsweise im Wartungsfall geöffnet werden oder das Filterelement 10 kann nur für den Wartungsfall über den Kanal 240 oder an eine sonstige Stelle, die den Zugriff auf die Drainageöffnung 32 ermöglicht, bewegt werden, so dass eine Drainage ermöglicht wird.

## Patentansprüche

1. Filterelement (10) zum Reinigen einer Betriebsflüssigkeit einer Werkzeugmaschine, umfassend ein innerhalb eines durchströmbaren, druckstabilen Mantels (40) angeordnetes Filtermedium (12) mit einer Reinseite und einer Rohseite , wobei sich das Filtermedium (12) entlang einer Längsachse zwischen zwei dichtend mit dem Filtermedium (12) verbundenen Endscheiben (20, 30) erstreckt und einen inneren, rohseitigen Hohlraum (18) umgibt, wobei der Mantel (40) das Filtermedium (12) umgibt und fest mit den Endscheiben (20, 30) verbunden ist, wobei in einer der Endscheiben (20) eine Einlassöffnung (22) für die Betriebsflüssigkeit in den inneren Hohlraum (18) angeordnet ist, wobei an der gegenüberliegenden Endscheibe (30) eine mit dem Hohlraum (18) korrespondierende Drainageöffnung (32) vorgesehen ist, wobei die drainageseitige Endscheibe (30) ein lösbares Schließelement (50) umfasst, welches die Drainageöffnung (32) verschließt, wobei das Schließelement (50) axial beweglich ist, insbesondere zur Öffnung der Drainageöffnung (32) vor dem Austausch des Filterelementes, wobei das Schließelement (50) zumindest im geschlossenen Zustand der Drainageöffnung (32) in einem von der drainageseitigen Endscheibe (30) axial nach innen weisenden Dichtstutzen (34) angeordnet ist, **dadurch gekennzeichnet, dass** der Dichtstutzen (34) an einer Innenseite ein Gewinde (36) aufweist, in welches ein Lösewerkzeug (100) einschraubar ist, wobei das Lösewerkzeug (100) direkt oder indirekt auf das Schließelement (50) wirkt.

2. Filterelement nach Anspruch 1, wobei der Dichtstutzen (34) ein Gewinde (36) aufweist, womit das Schließelement (50) zum Öffnen axial nach innen bewegbar ist.

3. Filterelement nach Anspruch 1 oder 2, wobei zwei verschiedene Gewinde für Schließelement (50) und Lösewerkzeug (100) vorgesehen sind.

4. Filterelement nach Anspruch 1 oder 2, wobei das Gewinde (36) für das Schließelement (50) und das Lösewerkzeug (100) gemeinsam vorgesehen ist.

5. Filterelement nach einem der vorhergehenden Ansprüche, wobei das Schließelement (50) zum Verschließen der Drainageöffnung (32) mittels eines Presssitzes in oder an dem Dichtstutzen (34) anordenbar ist.

6. Filterelement nach einem der vorhergehenden Ansprüche, wobei die Einlassöffnung (22) und die Drainageöffnung (32) sich entlang der Längsachse direkt gegenüberliegen und bei geöffneter Drainageöffnung (32) in direkter Fluidverbindung stehen.

7. Filterelement nach einem der vorhergehenden Ansprüche, wobei das Schließelement (50) zumindest im geschlossenen Zustand von der drainageseitigen Endscheibe (30) axial nach innen in den Filtertopf (16) ragt, vorzugsweise ganz in den Filtertopf (16) eintaucht.

8. Filterelement nach einem der vorhergehenden Ansprüche, wobei das Schließelement (50) zumindest im geschlossenen Zustand vollständig in der drainageseitigen Endscheibe (30) versenkt ist.

9. Filterelement nach einem der vorhergehenden Ansprüche, wobei das Schließelement (50) an seiner Außenseite ein Dichtelement (52) aufweist.

10. Filterelement nach einem der vorhergehenden Ansprüche, wobei die Drainageöffnung (32) mit einem Drainagefilterelement (70) verschlossen oder verschließbar ist.

11. Filterelement nach einem der vorhergehenden Ansprüche, wobei das Filterelement (10) einen Durchmesser zwischen 300 mm und 350 mm, vorzugsweise zwischen 310 mm und 340 mm, aufweist.

12. Filterelement nach einem der vorhergehenden Ansprüche, wobei das Filterelement (10) eine axiale Höhe zwischen 250 mm und 500 mm, vorzugsweise zwischen 300 mm und 450 mm, aufweist.

13. Werkzeugmaschine, insbesondere Funkenerodiermaschine, umfassend ein Filterelement (10) nach einem der vorhergehenden Ansprüche.

14. Verwendung eines Filterelements (10) nach einem der Ansprüche 1 bis 12 in einer Werkzeugmaschine, insbesondere einer Funkenerodiermaschine.

15. Verfahren zum Austausch eines Filterelementes nach einem der Ansprüche 1 bis 12 in einer Werkzeugmaschine, insbesondere einer Funkenerodiermaschine (230), bei welchem eine Einlassleitung (220) von der Einlassöffnung (22) getrennt wird, wobei die Drainageöffnung (32) durch Lösen oder Entfernen des Schließelements (50) geöffnet wird und im Filterelement (10) verbliebene Flüssigkeit abläuft, wobei anschließend das Filterelement (10) durch ein unverbrauchtes Filterelement (10) ausgetauscht wird und die Einlassleitung (220) an die Einlassöffnung (22) des unverbrauchten Filterelements (10) angeschlossen wird.

## Claims

1. Filter element (10) for cleaning an operating liquid of a machine tool, comprising a filter medium (12) having a clean side and a raw side disposed in a pressure-stable casing (40) that can be flowed through, wherein the filter medium (12) extends along a longitudinal axis between two end discs (20, 30) sealingly connected to the filter medium (12) and surrounds an inner raw-sided hollow space (18), wherein the casing (40) surrounds the filter medium (12) and is firmly connected to the end discs (20, 30), wherein an inlet opening (22) for the operating liquid in the inner hollow space (18) is disposed in one of the end discs (20), wherein a drainage opening (32) corresponding with the hollow space (18) is provided at the opposite end disc (30), wherein the drainage-sided end disc (30) comprises a detachable closing element (50) which closes the drainage opening (32), wherein the closing element (50) is axially movable, in particular for opening the drainage opening (32) before replacing the filter element, wherein the closing element (50), at least in closed state of the drainage opening (32), is disposed in a sealing nozzle (34) pointing axially inwards from the drainage-sided end disc (30), **characterized in that** the sealing nozzle (34) features a thread (36) on an interior side into which a release tool (100) is screwable, wherein the release tool (100) acts directly or indirectly on the closing element (50).

2. Filter element according to claim 1, wherein the sealing nozzle (34) features a thread (36), with which the closing element (50) is axially movable inwards for opening.

3. Filter element according to claim 1 or 2, wherein two different threads are provided for the closing element (50) and the release tool (100).

4. Filter element according to claim 1 or 2, wherein the thread (36) is provided together for the closing element (50) and the release tool (100).

5. Filter element according to one of the preceding claims, wherein the closing element (50) for closing the drainage opening (32) can be disposed in or on the sealing nozzle (34) by means of an interference fit.

6. Filter element according to one of the preceding claims, wherein the inlet opening (22) and the drainage opening (32) are directly opposite each other along the longitudinal axis and are in direct fluid communication when the drainage opening (32) is open.

7. Filter element according to one of the preceding claims, wherein the closing element (50), at least in closed state, protrudes from the drainage-sided end disc (30) axially inwards into the filter bowl (16), preferably immerses completely into the filter bowl (16).

8. Filter element according to one of the preceding claims, wherein the closing element (50), at least in closed state, is completely immersed into the drainage-sided end disc (30).

9. Filter element according to one of the preceding claims, wherein the closing element (50) features a sealing element (52) on its exterior side.

10. Filter element according to one of the preceding claims, wherein the drainage opening (32) is closed with or can be closed by a drainage filter element (70).

11. Filter element according to one of the preceding claims, wherein the filter element (10) features a diameter between 300 mm and 350 mm, preferably between 310 mm and 340 mm.

12. Filter element according to one of the preceding claims, wherein the filter element (10) features an axial height between 250 mm and 500 mm, preferably between 300 mm and 450 mm.

13. Machine tool, in particular a spark-erosion machine, comprising a filter element (10) according to one of the preceding claims.

14. Use of a filter element (10) according to one of the claims 1 to 12 in a machine tool, in particular in a spark-erosion machine.

15. Method for replacing a filter element according to one of the claims 1 to 12 in a machine tool, in particular in a spark-erosion machine (230), in which an inlet conduit (220) is separated from the inlet opening (22), wherein the drainage opening (32) is opened by releasing or removing the closing element (50) and liquid remaining in the filter element (10) is discharged, wherein the filter element (10) is then replaced by an unused filter element (10) and the inlet conduit (220) is connected to the inlet opening (22) of the unused filter element (10).

## Revendications

1. Élément filtrant (10) pour le nettoyage d'un liquide de travail d'une machine-outil, comprenant un milieu filtrant (12) ayant un côté pur et un côté brut disposé à l'intérieur d'une enveloppe (40) pouvant être parcourue et étant résistante à la pression, dans lequel le milieu filtrant (12) s'étend le long d'un axe longitudinal entre deux disques d'extrémité (20, 30) reliés de manière étanche au milieu filtrant (12) et entoure un espace creux (18) intérieur, côté brut, dans lequel l'enveloppe (40) entoure le milieu filtrant (12) et est solidement fixée aux disques d'extrémité (20, 30), dans lequel une ouverture d'admission (22) pour le liquide de travail dans l'espace creux (18) intérieur est disposé dans l'un des disques d'extrémité (20), dans lequel une ouverture de drainage (32) correspondant avec l'espace creux (18) est prévue sur le disque d'extrémité (30) opposé, dans lequel le disque d'extrémité (30), côté drainage, comprend un élément de fermeture (50) amovible qui ferme l'ouverture de drainage (32), dans lequel l'élément de fermeture (50) est mobile axialement, notamment pour ouvrir l'ouverture de drainage (32) avant de remplacer l'élément filtrant, dans lequel l'élément de fermeture (50), au moins en état fermé de l'ouverture de drainage (32), est disposé dans un bouchon d'étanchéité (34) dirigé axialement vers l'intérieur à partir du disque d'extrémité (30), côté drainage, **caractérisé en ce que** le bouchon d'étanchéité (34) présente un filetage (36) sur une face intérieure dans lequel peut être vissé un outil de déblocage (100), dans lequel l'outil de déblocage (100) agit directement ou indirectement sur l'élément de fermeture (50).

2. Élément filtrant selon la revendication 1, dans lequel le bouchon d'étanchéité (34) présente un filetage (36), avec lequel l'élément de fermeture (50) peut être déplacé axialement vers l'intérieur pour l'ouverture.

3. Élément filtrant selon la revendication 1 ou 2, dans lequel deux filetages sont prévus pour l'élément de fermeture (50) et l'outil de déblocage (100).

4. Élément filtrant selon la revendication 1 ou 2, dans lequel le filetage (36) est prévu ensemble pour l'élément de fermeture (50) et l'outil de déblocage (100).

5. Élément filtrant selon l'une des revendications précédentes, dans lequel l'élément de fermeture (50) pour fermer l'ouverture de drainage (32) peut être disposé dans ou sur le bouchon d'étanchéité (34) au moyen d'un ajustage serré.

6. Élément filtrant selon l'une des revendications précédentes, dans lequel l'ouverture d'admission (22) et l'ouverture de drainage (32) sont directement opposées l'une à l'autre le long de l'axe longitudinal et sont en communication fluidique directe lorsque l'ouverture de drainage (32) est ouverte.

7. Élément filtrant selon l'une des revendications précédentes, dans lequel l'élément de fermeture (50), au moins en état fermé, fait saillie en sens axial vers l'intérieur dans la cuve de filtration (16) à partir du disque d'extrémité (30), côté drainage, de préférence complètement immergé dans la cuve de filtration (16).

8. Élément filtrant selon l'une des revendications précédentes, dans lequel l'élément de fermeture (50), au moins en état fermé, est complètement immergé dans le disque d'extrémité (30).

9. Élément filtrant selon l'une des revendications précédentes, dans lequel l'élément de fermeture (50) présente un élément d'étanchéité (52) sur sa face extérieure.

10. Élément filtrant selon l'une des revendications précédentes, dans lequel l'ouverture de drainage (32) est fermée ou peut être fermée au moyen d'un élément filtrant de drainage (70).

11. Élément filtrant selon l'une des revendications précédentes, dans lequel l'élément filtrant (10) présente un diamètre entre 300 mm et 350 mm, de préférence entre 310 mm et 340 mm.

12. Élément filtrant selon l'une des revendications précédentes, dans lequel l'élément filtrant (10) présente une hauteur axiale entre 250 mm et 500 mm, de préférence entre 300 mm et 450 mm.

13. Machine-outil, notamment une machine d'électroérosion, comprenant un élément filtrant (10) selon l'une des revendications précédentes.

14. Utilisation d'un élément filtrant (10) selon l'une quelconque des revendications 1 à 12 dans une machine-outil, notamment dans une machine d'électroérosion.

15. Procédé pour remplacer un élément filtrant selon l'une quelconque des revendications 1 à 12 dans une machine-outil, notamment dans une machine d'électroérosion (230), où une conduite d'entrée (220) est séparée de l'ouverture d'admission (22), dans lequel l'ouverture de drainage (32) est ouverte en débloquant ou retirant l'élément de fermeture (50) et le liquide restant dans l'élément filtrant (10) s'écoule, dans lequel l'élément filtrant (10) est ensuite remplacé par un élément filtrant (10) non utilisé et la conduite d'entrée (220) est connectée à l'ouverture d'admission (22) de l'élément filtrant (10) non utilisé.
